# EUROPEAN PATENT APPLICATION

(11) **EP 1 871 054 A1**
(43) Date of publication of application: **26.12.2007**
(21) Application number: 07011985.4
(22) Date of filing: 19.06.2007
(51) Int. Cl.: H04L 12/56, H04Q 7/38, H04L 1/18

(54) **Method and apparatus for handling downlink data upon handover in a wireless communications system**

(30) Priority: 19.06.2006 US 805097 P
(71) Applicant: Innovative Sonic Limited, Tortola (VG)
(72) Inventor: Jiang, Sam Shiaw-Shiang, Taipei City (TW)
(74) Representative: Hager, Thomas Johannes

(57) **Abstract**

To handle downlink data upon handover of a user equipment from a source base station to a target base station in a wireless communications system, the source base station forwards a plurality of radio link control, hereafter RLC, service data units, hereafter SDUs, or RLC protocol data units, hereafter PDUs, that have not been positively acknowledged by the user equipment to the target base station (302). Then, the target base station sends the plurality of RLC SDUs or RLC PDUs to the user equipment (304).

## Description

This application claims the benefit of the filing date of U.S. Provisional Patent Application No. 60/805,097, filed on June 19, 2006, the contents of which are hereby incorporated by reference.

The present invention relates to a method for handling packets on downlink that have not been positively acknowledged upon handover and related communications device according to the pre-characterizing clauses of claims 1, 4, 7 and 9.

In a 3^{rd} generation, hereafter 3G, mobile telecommunications system, outstanding downlink data are handled upon inter-evolved Node B, hereafter eNB, handover according to Section 9.1.7 of 3GPP TR 25.813. Briefly, upon handover, all downlink radio link control service data units, hereafter RLC SDUs, are forwarded by a source eNB to a target eNB. Forwarding begins with a first SDU that a user equipment, hereafter UE, has not received successfully. Then, any remaining downlink RLC protocol data units, hereafter RLC PDUs, in the source eNB are discarded. The target eNB then retransmits all downlink RLC SDUs forwarded by the source eNB. The downlink RLC context is not forwarded to the target eNB by the source eNB. In other words, upon handover, the RLC entity is reestablished. Thus, all status variables are reset to their initial values, and a sequence number, hereafter SN, of an RLC PDU that is to be transmitted first is reset to zero, as are the SNs of RLC PDUs that are expected to be received next. The handover procedure described above functions properly when the RLC entity and the RLC re-establishment procedure described in 3GPP TR 25.322 V7.0.0, "RLC protocol specification (Release 7)" are used.

However, in LTE, a packet data convergence protocol, hereafter PDCP, entity, which is an upper layer of the RLC entity, must provide a PDCP SN for each packet, i.e. RLC SDU, to facilitate ciphering. The RLC entity can use the PDCP SN to perform re-ordering, duplication detection, flow control, and automatic repeat request, hereafter ARQ, functions. Thus, it is possible that an RLC header of the RLC PDU will not have an extra RLC SN field, so as to reduce protocol overhead. If there is no RLC SN field in the RLC PDU header, for example, when the PDCP SN is used for the ARQ functions in the RLC entity, the PDCP SN cannot be reset by the RLC entity. Thus, during the handover procedure described above, problems and inefficiencies may occur due to missing RLC PDUs.

This in mind, the present invention aims at providing a method for handling packets on downlink that have not been positively acknowledged upon handover and related communications device that increases efficiency.

This is achieved by a method for handling packets on downlink that have not been positively acknowledged upon handover and related communications device according to claims 1, 4, 7 and 9. The dependent claims pertain to corresponding further developments and improvements.

As will be seen more clearly from the detailed description following below, the claimed method for handling packets on downlink that have not been positively acknowledged upon handover and related communications device includes forwarding a plurality of RLC SDUs or RLC PDUs that have not been positively acknowledged by a UE from a source base station to a target base station.

In the following, the invention is further illustrated by way of example, taking reference to the accompanying drawings. Thereof
Fig. 1 is a function block diagram of a wireless communications device,
Fig. 2 is a diagram of program code of Fig. 1,
Fig. 3 is a flowchart of a process according to a first embodiment of the present invention, and
Fig. 4 is a flowchart of a process according to a second embodiment of the present invention.

3GPP radio-access technology is poised for continued competitiveness in years to come with such enhancements as high-speed downlink protocol access, hereafter HSDPA, and Enhanced Uplink. In the long term, competitiveness is assured through what is called a "long-term evolution", hereafter LTE, of the 3GPP radio-access technology. According to 3GPP TR 25.813 V1.0.1 (2006-06), "Evolved Universal Terrestrial Radio Access (E-UTRA) and Evolved Universal Terrestrial Radio Access Network (E-UTRAN) Radio Interface Protocol Aspects," hereafter "3GPP TR 25.813," the LTE includes important advances such as, "reduced latency, higher user data rates, optimised support for packet services, improved system capacity and coverage, and reduced cost for the operator, while also reducing system complexity."

During data transmission on the downlink, i.e. from the eNB to the UE in LTE, suppose that PDCP SN = 0, 1, 2, 3, 4, 5, ..., 20 have been transmitted on the downlink before the handover occurs. Upon handover, all the RLC PDUs have been received successfully and positively acknowledged by the UE except for PDCP SN = 2 and 3. According to the above-described procedure, upon handover, the source eNB will forward all SDUs, starting from PDCP SN = 2. Namely, PDCP SN = 2 to 20 are forwarded to the target eNB from the source eNB. The target eNB then retransmits all downlink RLC SDUs forwarded by the source eNB. In other words, although the UE has already successfully received PDCP SN = 4 to 20, the target eNB retransmits PDCP SN = 2 to 20. Thus, data packets that have been received successfully are retransmitted unnecessarily, which lowers efficiency.

In 3GPP TR 25.813, it is mentioned that "the optimization, to only re-transmit the downlink RLC SDUs not successfully received by the UE, is FFS." However, in the same: "the source eNB does not forward the downlink RLC context to the target eNB." Therefore, the target eNB has no information about whether or not a forwarded RLC SDU has been successfully received by the UE. Consider data transmission on the downlink (from eNB to UE). Suppose PDCP SN = 0, 1, 2, 3, 4, 5, ..., 20 have been transmitted on the downlink before a handover occurs. Upon handover, all the RLC PDUs have been received successfully and are positively acknowledged by the UE, except for PDCP SN = 2 and 3. By 3GPP TR 25.813, upon handover, the source eNB forwards all SDUs starting from PDCP SN = 2, i.e., PDCP SN = 2 to 20 are forwarded from the source eNB to the target eNB. Now, if the target eNB only retransmits the downlink RLC SDUs not successfully received by the UE for optimization, two straightforward methods are available: 1) asking the UE for a downlink receiving status report, or 2) asking the source eNB to provide the status information, i.e. part of the RLC context, upon handover. Both of the two straightforward methods require an extra procedure to optimize the transmission. In addition, data packets that have been received successfully by the UE, and forwarded by the source eNB, are eventually discarded by the target eNB. Thus, forwarding these data packet is not necessary, and wastes the connection bandwidth between the source eNB and the target eNB.

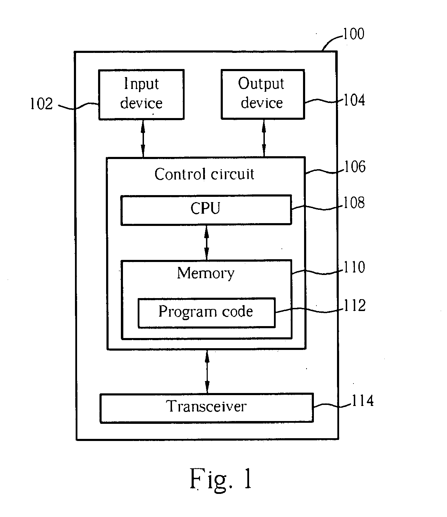

Please refer to Fig. 1, which is a function block diagram of a communications device 100. For the sake of brevity, Fig. 1 only shows an input device 102, an output device 104, a control circuit 106, a central processing unit, hereafter CPU, 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers.

The transceiver 1 14 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation, hereafter 3G, mobile communications system.

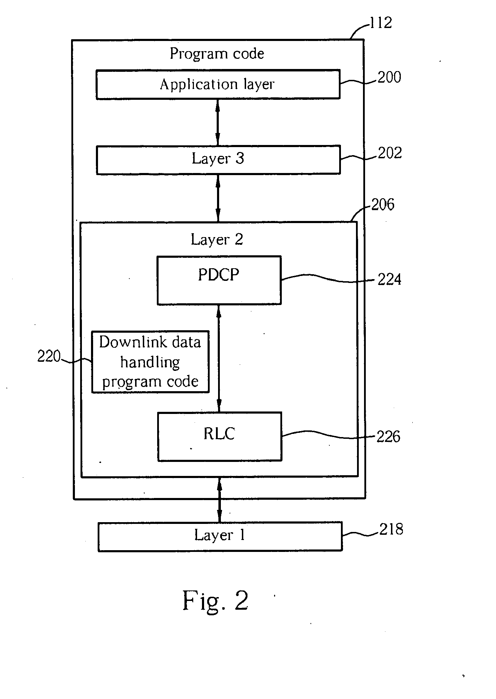

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 2 206 comprises two sub-layers: a radio link control, hereafter RLC, entity 226 and a packet data convergence protocol, hereafter PDCP, entity 224. The PDCP entity 224 is an upper layer to the RLC entity 226. Primary functions of the RLC entity 226 include segmentation, reassembly, concatenation, padding, retransmission, sequence check, and duplication detection on transmitted data or control instructions based on different transmission quality requirements. The PDCP entity 224 is primarily responsible for compression/decompression of headers, transfer of user data, ciphering and maintenance of PDCP sequence numbers.

In LTE, the PDCP entity 224 must provide a PDCP SN for each packet, i.e. for each RLC SDU, to facilitate ciphering functionality. The RLC entity 226 can use the PDCP SNs when performing re-ordering, duplication detection, flow control, and ARQ functionalities. Thus, it is possible that there is no extra RLC SN field in the RLC header of a RLC PDU to reduce protocol overhead. To increase efficiency during handover, the program code 112 comprises a downlink data handling program code 220.

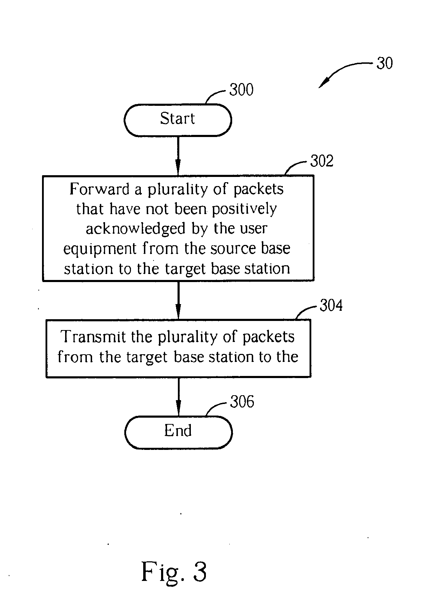

Please refer to Fig. 3, which is a flowchart of a process 30 according to a first embodiment of the present invention. The process 30 is utilized for handling downlink data upon handover in the wireless communications system, and can be complied into the downlink data handling program code 220. The process 30 comprises the following steps:
Step 300: Start.
Step 302: Forward a plurality of packets that have not been positively acknowledged by the user equipment from the source base station to the target base station.
Step 304: Transmit the plurality of packets from the target base station to the UE.
Step 306: End.

According to the process 30, when handover occurs, the source base station forwards the downlink packets that have not been positively acknowledged by the UE to the target base station. Packets that have been positively acknowledged by the UE are not forwarded from the source base station to the target base station. In this way, packets that have been successfully received by the UE will not be transmitted by the target base station, because they have not been forwarded from the source base station. No RLC context need be forwarded to the target base station. And no extra procedure, such as asking the UE for a downlink receiving status report, is needed to optimize data transmission with this method. Preferably, the target base station initiates a transmission window to start from a sequence number of the earliest packet among the plurality of packets. Furthermore, it is preferred that gaps among the plurality of packets are treated as having been positively acknowledged. The plurality of packets is preferably RLC SDUs or RLC PDUs.

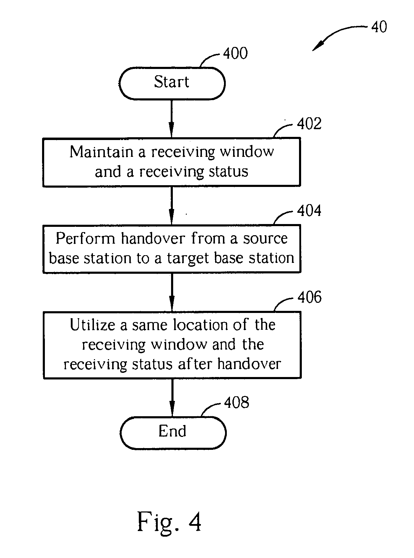

Please refer to Fig. 4, which is a flowchart of a process 40 according to a second embodiment of the present invention. The process 40 is utilized for handling downlink data by a user equipment upon handover in the wireless communications system, and can be complied into the downlink data handling program code 220. The process 40 comprises the following steps:
Step 400: Start.
Step 402: Maintain a receiving window and a receiving status.
Step 404: Perform handover from a source base station to a target base station.
Step 406: Utilize a same location of the receiving window and the receiving status after handover.
Step 408: End.

In the process 40, for downlink, the receiving window of the UE is not reset upon and after handover. The process 40 can further include the UE re-ordering of the data packets received on downlink before and after handover.

In summary, the present invention forwards the plurality of packets that have not been positively acknowledged by the user equipment from a source base station to a target base station when the UE is handed over from the source base station to the target base station. Compared to the prior art, the present invention is more efficient, and does not require an extra procedure, such as asking the UE for a downlink receiving status report, to optimize data transmission.

## Claims

1. A method of handling downlink data upon handover of a user equipment from a source base station to a target base station in a wireless communications system, the method comprising:
forwarding a plurality of packets have not been positively acknowledged
by the user equipment from the source base station to the target base station (302); and
transmitting the plurality of packets from the target base station to the user equipment (304); and
**characterized in that** the plurality of packets have not been positively acknowledged by the user equipment.

2. The method of claim 1 **characterized by**:
creating a transmission window by the target base station; and
initiating the transmission window to start from a sequence number of an earliest packet among the plurality of packets.

3. The method of claim 2 **characterized by**:
treating gaps among the plurality of packets as having been positively acknowledged.

4. The method of claim 1 , **characterized in that** the plurality of packets are a plurality of radio link control service data units or radio link control protocol data units.

5. A communications device (100) of a wireless communications system utilized for handling downlink data upon handover of a user equipment from a source base station to a target base station, the communications device comprising:
a control circuit (106) for realizing functions of the communications device;
a central processing unit (108) installed in the control circuit for executing program codes to operate the control circuit; and
a memory (110) coupled to the central processing unit; and
the memory (108) comprising:
program code executed for the communications device to perform a first function of the source base station;
program code executed for the first function to forward a plurality of packets to the target base station (302);
program code executed for the communications device to perform a second function of the target base station; and
program code executed for the second function to transmit the plurality of packets, which are forwarded from the source base station, to the user equipment (304).
**characterized in that** the plurality of packets have not been positively acknowledged by the user equipment. (302)

6. The communications device of claim 5, **characterized in that** the memory further comprises:
program code executed for the second function to create a transmission window; and
program code executed for the second function to initiate the transmission window to start from a sequence number of an earliest SDU or PDU among the plurality of packets.

7. The communications device of claim 6, **characterized in that** the memory further comprises:
program code executed for the second function to treat gaps among the plurality of packets as having been positively acknowledged.

8. The communications device of claim 5, **characterized in that** the plurality of packets are a plurality of radio link control service data units or radio link control protocol data units.

9. A method of handling downlink data by a user equipment upon handover from a source base station to a target base station in a wireless communications system, the method comprising:
maintaining a receiving window and a receiving status (402);
performing handover from the source base station to the target base station (404); and
**characterized by**:
utilizing a same location of the receiving window and the receiving status after handover (406).

10. The method of claim 9 **characterized by**:
re-ordering data packets received on downlink before and after
handover.

11. A communications device (100) of a wireless communications system utilized for handling downlink data upon handover from a source base station to a target base station, the communications device comprising :
a control circuit (106) for realizing functions of the communications device;
a central processing unit (108) installed in the control circuit for executing program codes to operate the control circuit; and
a memory (110) coupled to the central processing unit and comprising:
program code executed for maintaining a receiving window and a receiving status (402);
program code executed for performing handover from the source base station to the target base station (404); and
**characterized by** the memory further comprising:
program code executed for utilizing a same location of the receiving window and the receiving status after handover (406).

12. The communications device of claim 11, **characterized in that** the memory further comprises program code executed for re-ordering data packets received on downlink before and after handover.
